Europäisches Patentamt

(19) European Patent Office

Office européen des brevets

(11) Publication number: **0 056 239**
**B1**

(12) **EUROPEAN PATENT SPECIFICATION**

(45) Date of publication of patent specification: **23.04.86**

(51) Int. Cl.⁴: **G 01 J 3/44,** G 01 N 21/63

(21) Application number: **82100029.6**

(22) Date of filing: **05.01.82**

(54) **Method of measuring Raman spectra and laser Raman spectrophotometry system.**

(30) Priority: **14.01.81 JP 3047/81**

(43) Date of publication of application:
**21.07.82 Bulletin 82/29**

(45) Publication of the grant of the patent:
**23.04.86 Bulletin 86/17**

(84) Designated Contracting States:
**DE FR GB**

(56) References cited:
**DE-A-2 736 950**
**US-A-4 100 416**
**US-A-4 239 390**

**JOURNAL OF PHYSICS E. SCIENTIFIC
INSTRUMENTS, vol. 10, no. 6, 1977, London, S.
BURGESS et al. "Fluorescence suppression in
time-resolved raman spectra", pages 617-620
Applied Optics 15, no. 12, (1976), p. 2969,2970**

(73) Proprietor: **Hitachi, Ltd.**
**5-1, Marunouchi 1-chome**
**Chiyoda-ku Tokyo 100 (JP)**

(72) Inventor: **Tochigi, Kenji**
**Hachimanyama Ap.Hs 446 1545 Yoshidacho,**
**Totsuka-ku**
**Yokohama-shi, Kanagawa-ken (JP)**
Inventor: **Hanyu, Yoshiaki**
**70-3, Torigaoka**
**Yokohama (JP)**
Inventor: **Hiratsuka, Yutaka**
**2818-22, Iijimacho Totsuka-ku**
**Yokohama (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

# Description

The present invention relates generally to a method of measuring Raman spectra and a corresponding laser Raman spectrophotometry system with fluorescence rejection.

For analyzing dusts or foreign materials of extremely small size deposited e.g. on semiconductor elements or devices, thin-film devices etc., laser Raman spectrophotometry is used. However, in the Raman spectrophotometry, sometimes fluorescence of a high intensity occurs in addition to the Raman-scattered light in dependence on the kind of sample material. In particular, materials intended for industrial uses or applications which are accompanied by relatively large amounts of impurities and materials which have undergone thermal cycles and accordingly have thermal histories tend to produce fluorescence with relatively high intensity, which is usually of higher intensity and has a broader spectral width as compared with Raman-scattered light. Since it is practically impossible to prepare the sample or specimen purely for the Raman spectrophotometry, because troublesome procedures such as purification and the like are required discrete detection of the Raman-scattered light is only possible on the basis of a fluorescence rejection, which complicates analysis.

For eliminating the disturbing fluorescence which often occurs in the Raman scattering spectrophotometry, time resolution spectrum analysis based on the difference of life time between fluorescence and Raman scattering and polarization discrimination based on the polarization difference between fluorescence and Raman-scattered light have been proposed. However, the life time of fluorescence is not constant but varies from the order of pico-seconds at the shortest to the order of several seconds at the longest. On the other hand, the polarization difference is not a general physical quantity which holds for every material. Thus, these methods lack flexibility and are not suited for general or universal applications.

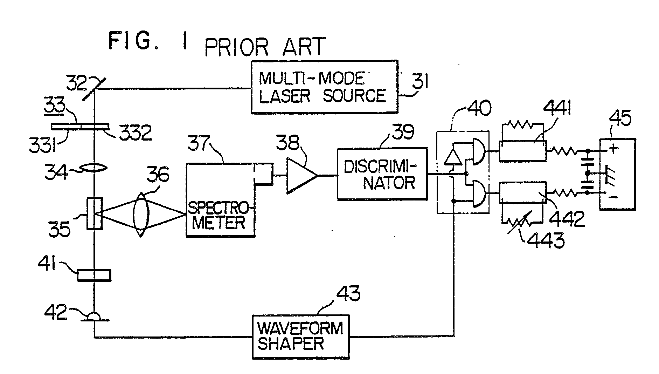

Further, there is known a laser Raman spectrophotometry system which is more general applicable and is based on the fact that the fluorescence frequency is not dependent on the incident photon energy. In this system an incident wavelength modulation is used (Applied Optics 15, No. 12 (1976) 2969—2970 J. F. Morhange and C. Hirlimann, "Luminescence rejection in Raman spectroscopy"). The system comprises one single Ar⁺-laser, whereby the 488.0 nm line is used for excitation of fluorescence, while the 514.5 nm line is used for measuring the sum spectra of the Raman-scattered light and the fluorescence. Since, for a given grating position of the spectrometer, the Raman-scattered light is dependent on the exciting frequency and the fluorescence is not, the analyzed signal corresponds alternately to the sum of Raman-scattered light plus fluorescence light and to the fluorescence light alone. The fluorescence rejected spectrum is obtained by signal subtraction. Through subsequent processing, the spectrum of the fluorescence excited by the wavelength of 488.0 nm is subtracted from the spectrum excited by the wavelength of 514.5 nm, which leads to the pure Raman spectrum. Fig. 1 shows the arrangement of this known Raman spectrophotometry system for carrying out the method mentioned above. A laser beam produced by a multi-mode laser light source 31 which may be constituted by an Ar⁺-laser is reflected by means of a reflector plate 32 and impinges onto a rotating disc filter 33 which is constituted by a semi-circular filter section 331 adapted to transmit therethrough the light of the wavelength of 488.0 nm and another semi-circular filter section 332 which is adapted to pass therethrough the light of 514.5 nm in wavelength, both filter sections 331 and 332 being bonded together to form the disc filter 33. The disc filter 33 thus serves for extracting alternately only the rays having wavelengths of 488.0 nm and 514.5 nm from the all-lines beam emitted from the laser light source 31. The light transmitted through the disc filter 33 is then collected by a condenser lens system 34 and directed to a specimen 35. Scattered light in the Stokes-Raman region excited by the light of wavelength of 514.5 nm is collected by a condenser lens system 36 and introduced into a spectrometer 37 comprising an opto-electrical detector. The electrical signal thus produced by the spectrometer 37 is amplified by a preamplifier 38 and subsequently applied through a discriminator 39 to a gate circuit 40 which is opened and closed in synchronism with the rotation of the disc filter 33. To this end, the laser beam of 488.0 nm in wavelength irradiating the specimen 35 is directed to a photo-diode 42 through a filter 41 adapted to pass therethrough the wavelength of 488.0 nm. The electrical signal thus produced by the photo-diode 42 is applied to the gate circuit 40 as the synchronizing signal after having been shaped through a waveform shaper circuit 43. The gate circuit 40 produces two separate output signals which correspond to irradiation of the specimen by the laser beams of 488.0 nm and 514.5 nm in wavelength. The separate output signals produced by the gate circuit 40 are then supplied to frequency-voltage converters 441 and 442, respectively, as may be seen from Fig. 1. The input signals to these frequency-voltage converters 441 and 442 are converted into voltage signals which are applied to the plus (+) and minus (−) terminals of a recorder 45, which records the difference between these voltage signals. However, this known spectrophotometry system suffers from the drawback that the laser light power cannot be separately adjusted because the rays of wavelengths of 488.0 nm and 514.5 nm emitted simultaneously by the single laser source are used for the excitation. Another disadvantage may be seen in that an improved S/N ratio cannot be realized because the adjustment of the fluorescence level produced upon excitation by the rays of wavelength of 488.0 nm is effected by lowering the output level of the frequency-voltage converter 442 by means of an attenuator 443. In particular, when the fluorescence is of high intensity, the fluorescence component cannot be eliminated satisfactorily. Further, since filters are used for selecting laser rays of predetermined wavelength, the intensity of the laser light inciding on to the specimen is correspondingly decreased, resulting in a correspondingly reduced intensity of the Raman-scattered light, which in turn means a corresponding relative noise increase, i.e. a decrease of the S/N ratio.

Accordingly it is an object of the present invention to provide a method of measuring Raman spectra and a corresponding laser Raman spectrophotometry system which are free of the drawbacks of the known system and allow measuring Raman spectra with fluorescence rejection at an improved S/N ratio.

The above object is achieved according to the claims 1 and 5. The corresponding subclaims refer to preferred embodiments.

The method of measuring Raman spectra according to the invention comprises the steps of irradiating a specimen alternately and periodically with two laser beams of different wavelength at a predetermined frequency, the laser beam of the first wavelength generating from the specimen fluorescence plus Raman spectrum and the laser beam of the second wavelength generating from the specimen only a fluorescence spectrum, detecting said respective spectra by means of a spectrometer including a detector to produce first and second signals representative thereof, and using lock-in amplifier means operating at said predetermined frequency effectively to subtract said first and second signals so as to provide an output signal representing substantially only said Raman spectrum and is characterized in that the laser beams of said first and second wavelengths are provided by first and second laser sources and the second laser source is controlled to adjust the intensity of the beam emitted therefrom in such a manner that the resulting intensity of the fluorescence spectrum obtained with the second laser beam of the second wavelength is equal to the intensity of the fluorescence background component of the fluorescence plus Raman spectrum obtained with the first laser beam of the first wavelength.

The laser Raman spectrophotometry system according to the invention comprises laser source means arranged to provide a first laser beam of a first wavelength and a second laser beam of a second wavelength different from said first wavelength, optical means for alternately and periodically at a predetermined frequency directing the first and the second laser beam along a substantially identical optical path to a specimen to be measured, the first laser beam of the first wavelength being arranged to generate from the specimen a fluorescence plus Raman spectrum and the second laser beam of the second wavelength being arranged to generate from the specimen only said fluorescence spectrum, a spectrometer including a detector detecting light emitted from the specimen and converting it into first and second electrical signals, respectively representing the fluorescence plus Raman spectrum and the fluorescence only spectrum, and lock-in amplifier means operating at said predetermined frequency and arranged effectively to subtract said first and second signals so as to provide an output signal representing substantially only said Raman spectrum, and is characterized by said laser source means comprising a first and a second laser source respectively providing said first and second laser beams, and controller means controlling the second laser source so as to adjust the intensity of the beam emitted therefrom in such a manner that the resulting intensity of the fluorescence only spectrum obtained with the second laser beam of the second wavelength is equal to the intensity of the fluorescence background component of the fluorescence plus Raman spectrum obtained with the first laser beam of the first wavelength.

According to a preferred embodiment of the invention, the second laser light source for irradiating the specimen and producing a continuous fluorescence is an $Ar^+$-laser, whereas the first laser light source for excitation of the Raman-scattered light is a $Kr^+$-laser. The wavelength of the light of the $Kr^+$-laser is selected longer than that of the $Ar^+$-laser for measuring Stokes-Raman scattering. The specimen to be analyzed is irradiated with both of the laser beams alternately and periodically at a predetermined frequency through an optical switch. The region of wavelengths longer than that of the $Kr^+$-laser is referred to as the Stokes-Raman region. The scattered light of the Stokes-Raman region produced under excitation by the laser beam of the $Kr^+$-laser for exciting Raman scattering yields a first fluorescence spectrum. Irradiation of the specimen with the laser beam emitted by the $Ar^+$-laser for fluorescence excitation yields a second fluorescence spectrum. By subtractive superposition of the Raman-scattered light and the fluorescence light obtained from the specimen with excitation by the $Kr^+$-laser and the $Ar^+$-laser, the pure spectrum of Raman-scattered light produced by the specimen irradiated with light of the $Kr^+$-laser can be measured. By adjusting the intensity of the laser beam emitted by the $Ar^+$-laser for fluorescence excitation the intensity of the fluorescence as produced is controlled in such a manner that the resulting intensity of the fluorescence only spectrum obtained with the $Ar^+$-laser beam is equal to the intensity of the fluorescence background component of the fluorescence plus Raman spectrum obtained with the laser beam of the $Kr^+$-laser. Both spectrum signals thus obtained undergo phase-sensitive detection at a predetermined frequency, wherein the Raman-scattered light signal containing the background component is added with the fluorescence spectrum intensity signal resulting from irradiation with the $Ar^+$-laser for fluorescence excitation after polarity inversion thereof, to thereby eliminate the background fluorescence spectrum component contained in the Raman spectrum. In this manner, Raman spectra with fluorescence rejection can be measured.

In the following, the invention will be explained with more details with reference to the drawings:

Fig. 2 illustrates Raman spectrophotometry system according to an exemplary embodiment of the present invention;

Fig. 3 is a diagram illustrating the operation of the system shown in Fig. 2, and

Fig. 4 shows a spectrum chart obtained from measurement of carnauba wax effected by using the laser Raman spectrophotometry system according to the invention.

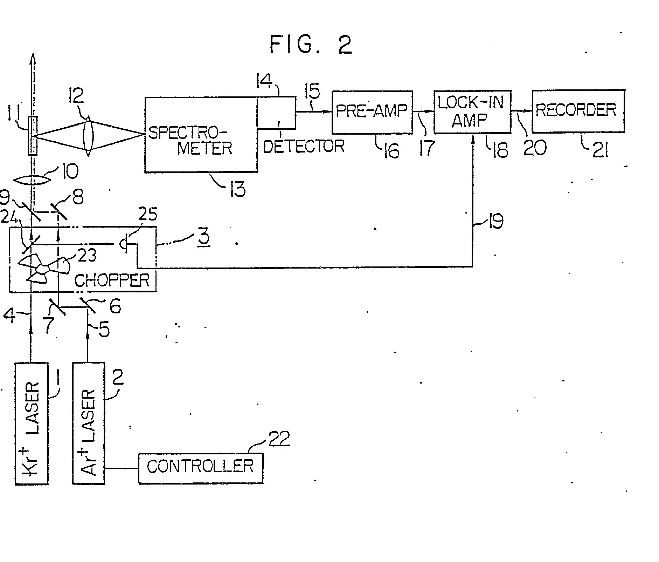

The fundamental arrangement of the laser Raman spectrophotometry system according to an exemplary embodiment of the invention shown in Fig. 2 comprises a $Kr^+$-laser as first laser light source 1 continuously emitting a laser light beam 4, e.g. 530.9 nm in wavelength, and an $Ar^+$-laser as second laser source 2 continuously emitting a laser light beam 5, e.g. 488.0 nm in wavelength. The laser beam 4 is transmitted through an optical chopper 3, a half mirror 9 and a condenser lens system 10 for irradiating a specimen 11, while the laser beam 5 follows an optical path deflected by a pair of plane mirrors 6 and 7 and is directed to the specimen 11 for irradiation thereof through the optical chopper 3, a plane mirror 8, the half mirror 9 and the condenser lens system 10. The optical chopper 3 serves to transmit therethrough alternately and periodically the laser beams 4 and 5. As can be seen from Fig. 2, the laser beams 4 and 5 follow separate optical paths until they reach the half mirror 9, which may be replaced by another, equivalent element such as, for example, a semi-circular mirror which serves to direct the two light beams coming from different paths into the same optical path. For allowing adjustment of the intensity ratio of the individual fluorescences produced at the specimen 11 upon excitation by the laser beams 4 and 5, a power controller 22 is connected to the $Ar^+$-laser 2.

For measuring scattered light from the specimen 11, there are disposed along a predetermined scattering light path a condenser lens system 12, a spectrometer 13 and an opto-electrical detector 14 which may be incorporated in the spectrometer 13. Thus, the light produced by the specimen 11 is focused by the condenser lens system 12 and projected to the spectrometer 13 to undergo wavelength dispersion so as to detect monochromated light by the detector 14. The electrical output signal produced through opto-electrical conversion by the detector 14 is supplied to a pre-amplifier 16 for preamplification. The output signal 17 from the pre-amplifier 16 is applied to the signal input terminal of a lock-in amplifier 18 which has a reference signal input terminal applied with a chopping frequency reference signal 19 representative of the chopping frequency of the light chopper 3. An example for the generation of the chopping frequency reference signal 19 by the optical chopper 3 will be described hereinbelow. There is provided in the chopper 3 a three-blade sector wheel 23 for alternately interrupting the laser beams 4 and 5 coming from the laser light sources 1 and 2, respectively, in such a manner that the laser beam 4 is transmitted while the laser beam 5 is interrupted and vice versa. The sector wheel 23 preferably has light transmitting parts and light shutting parts of equal width. When the light beam 4 from the laser source 1 is not interrupted by the sector wheel 23 but transmitted, part of the light beam 4 is splitted by a half mirror 24 and directed onto an opto-electrical detector 25 such as photo-cell, photo-transistor or the like. Other beam splitter means such as a prism may also be used in place of the half mirror 24. On the other hand, the remaining greater part of the light beam 4 is directed to the half mirror 9. The light input to the opto-electrical detector 25 is converted into a pulse-shaped electrical signal which is then applied to the lock-in amplifier 18 as the chopping frequency reference signal 19. In the case of the illustrated system, the chopping frequency reference signal 19 has a constant frequency (e.g. 39 Hz) which is three times as high as the rotational frequency (e.g. 13 Hz) of the three-blade sector wheel 23. In this connection, it should be mentioned that the optical chopper 3 may be of other structure, so far as the two light beams are periodically and alternately transmitted and a reference signal having a predetermined phase relation to one of the output light beams can be derived. The specimen 11 is thus irradiated periodically and alternately with two types of light beams 4 and 5. It is preferred that the respective duration of irradiation is the same for the two light beams 4 and 5. In the following description, it is assumed that the reference signal 19 is in phase with the laser beam 4 transmitted through the optical chopper 3 as in the case of Fig. 2.

The lock-in amplifier 18 serves to detect and amplify only the signal component of the output signal 17 from the pre-amplifier 16 that has the same frequency as that of the chopping frequency reference signal 19 derived from the light chopper 3 and a predetermined phase relation (e.g. the same phase, as in the illustrated embodiment) to the chopping frequency reference signal 19. The signal component thus detected and amplified by the lock-in amplifier 18 is supplied to a recorder 21. The recorder 21 amplifies the output signal from the lock-in amplifier 18 and records the spectrum charts. Since the lock-in amplifier 18 detects and amplifies only the signal component of the input signal that has the same frequency as that of the reference signal 19, as described above, the input signal component having a frequency different from that of the reference signal 19 is not sampled. Further, by appropriately selecting the locked-in phase, the signal component corresponding to the laser beam 4 and the signal component corresponding to the laser beam 5 can be sampled in an appropriate phase relation. Thus, when the phase relation is so selected that both the above-mentioned signal components are in opposite phase with each other, the difference between these two signal components is detected. In this connection, the power of the Ar⁺-laser 2 is adjusted by the power controller 22 so that the intensity of fluorescence detected by the detector 14 upon irradiation of the specimen 11 by the laser beam 5 from the Ar⁺-laser 2 is at substantially the same level as the intensity of fluorescence detected by the detector 14 upon irradiation of the specimen 11 by the laser beam 4 from the Kr⁺-laser 1. When the intensity of fluorescence produced by the laser beam 5 is adjusted to be equal to the intensity of fluorescence produced by the laser beam 4 in this way, the fluorescence intensity remains constant regardless of the switching between the laser beams 4 and 5 by the optical chopper, resulting in that only the intensity of Raman-scattered light is chopped at the chopping frequency. In other words, only the Raman-scattered light is modulated with the switching frequency of the optical chopper 3. As the consequence, only the Raman-scattered light is detected and amplified by the lock-in amplifier 18 and recorded by the recorder 21.

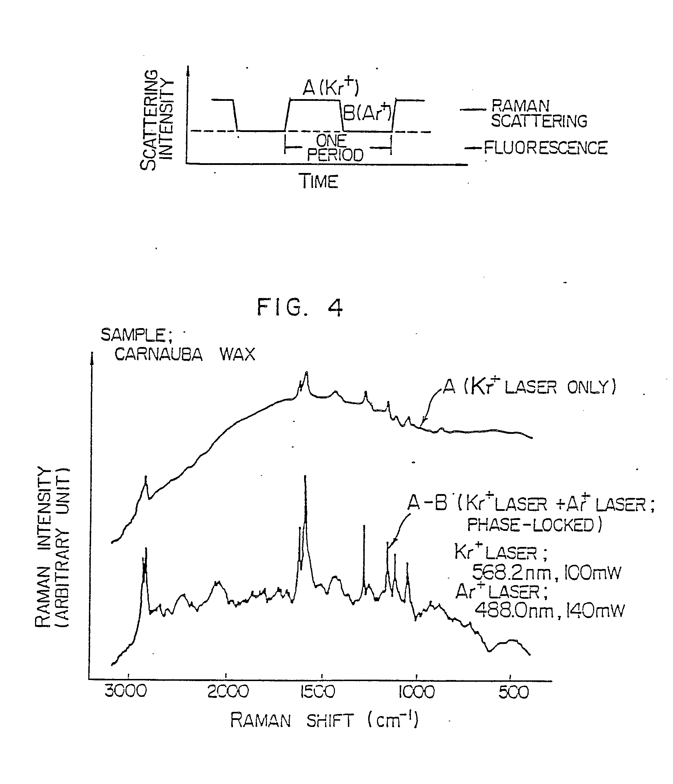

Referring to Fig. 3, when the three-blade sector wheel 23 is open for the laser beam 4 from the Kr⁺-laser source 1, a signal represented by A in Fig. 3 is supplied to the input of the lock-in amplifier 18. Subsequently, when the sector wheel 23 is closed for the laser beam 4 from the Kr⁺-laser source/and open for the laser beam 5 from the Ar⁺-laser source 2, then a signal B is applied to the input of the lock-in amplifier 18. The signals corresponding to one period (e.g. 39 Hz) are arithmetically processed, whereby a difference signal (A—B) appears at the output of the lock-in amplifier 18. Through wavelength scanning of the spectrometer 13, a spectrum of the difference signal (A—B) is obtained. The scanning speed of the spectrometer should be selected to be lower than the speed corresponding to the time constant of the lock-in amplifier 18 in order to prevent wavelength shift in the measured spectrum. Accordingly, the wavelength scan by the spectrometer 13 is effected at such a low speed that the wavelength shift within a period of the input signal frequency (e.g. 39 Hz) can be neglected. Theoretically, one wavelength scan by the spectrometer is enough to measure the spectrum. However, it is possible to repeat the scan and store in an external memory the results obtained from a number of repeated scans, for the purpose of improving the S/N ratio by integration at each wavelength.

Fig. 4 shows a spectrum chart measured by the laser Raman spectrophotometry system according to the invention referring to the analysis of carnauba wax contained as a mold releasing agent in resin-mold semiconductor devices. In Fig. 4, the spectrum profile curve A represents the results of measurements obtained by using the Kr⁺-laser signal only, corresponding to the fluorescence plus Raman spectrum, whereas the spectrum profile curve A—B represents the differential spectrum in which the fluorescence spectral component has been eliminated according to the invention. From a comparison of the curves A and A—B, the fluorescence rejection of the system according to the invention will be readily appreciated.

Further, it should be mentioned that since random noise components which may be detected by the detector 14 are not modulated with the chopping frequency, they are neither detected nor amplified by the lock-in amplifier 18. Accordingly, noise superposed on the Raman-scattered light is decreased, and the S/N ratio of the Raman scattering signal is enhanced.

As is apparent from the foregoing, according to the illustrated embodiment, fluorescence superposed on the Raman-scattered light can be effectively eliminated with random noise being concurrently suppressed, whereby even weak Raman scattering spectra which could not reliably be measured by the prior art techniques can now be measured with an improved S/N ratio according to the invention.

The present invention is not limited to the above-described embodiments. Anti-Stokes Raman scattering may be measured preferably with a wavelength of the fluorescence exciting laser which is longer than that of the Raman scattering exciting laser. Further, the present invention can be applied to the measurement of very weak signals which are accompanied by an intense noise level, as in Brillouin scattering or the like.

**Claims**

1. A laser Raman spectrophotometry system comprising:

laser source means (1, 2) arranged to provide a first laser beam (4) of a first wavelength, and a second laser beam (5) of a second wavelength different from said first wavelength,

optical means (3, 8, 9) for alternately and periodically at a predetermined frequency directing the first and the second laser beam along a substantially identical optical path to a specimen (11) to be measured,

the first laser beam (4) of the first wavelength being arranged to generate from the specimen a fluorescence plus Raman spectrum and the second laser beam (5) of the second wavelength being arranged to generate from the specimen only said fluorescence spectrum,

a spectrometer (13) including a detector (14) detecting light emitted from the specimen (11) and converting it into first and second electrical signals, respectively representing the fluorescence plus Raman spectrum and the fluorescence only spectrum, and

lock-in amplifier means operating at said predetermined frequency and arranged effectively to subtract said first and second signals so as to provide an output signal representing substantially only said Raman spectrum, characterized by

said laser source means comprising a first (1) and a second (2) laser source, respectively providing said first and second laser beams, and controller means (22) controlling the second laser source (2) so as to adjust the intensity of the beam emitted therefrom in such a manner that the resulting intensity of the fluorescence only spectrum obtained with the second laser beam (5) of the second wavelength is equal to the intensity of the fluorescence background component of the fluorescence plus Raman spectrum obtained with the first laser beam (4) of the first wavelength.

2. A laser photometry system according to claim 1, characterized in that the optical means (3, 9) include reference signal means (32, 33) generating an electrical reference signal having said predetermined frequency and a constant phase relation with the alternately directed first and second laser beams, the reference signal being supplied to the lock-in amplifier (18).

3. A laser spectrophotometry system according to claim 1 or 2, characterized in that the optical means (3, 9) comprise a bladed sector shutter (31) having transmitting and shutting sectors of equal width.

4. A laser spectrophotometry system according to one of claims 1 to 3, characterized in that said reference signal means (32, 33) comprise a beam splitter (32) splitting the first laser beam (4) and an opto-electrical detector (33) receiving the part of said first laser beam and converting it into the electrical reference signal.

5. A method of measuring Raman spectra comprising:

irradiating a specimen alternately and periodically with two laser beams of different wavelength at a predetermined frequency, the laser beam of the first wavelength generating from the specimen fluorescence plus Raman spectrum and the laser beam of the second wavelength generating from the specimen only a fluorescence spectrum, detecting said respective spectra by means of a spectrometer including a detector to produce first and second signals representative thereof, and using lock-in amplifier means operating at said predetermined frequency effectively to subtract said first and second signals so as to provide an output signal representing substantially only said Raman spectrum, characterized in that

the laser beams of said first and second wavelengths are provided by first and second laser sources (1, 2) and the second laser source (2) is controlled to adjust the intensity of the beam emitted therefrom in such a manner that the resulting intensity of the fluorescence spectrum obtained with the second laser beam of the second wavelength is equal to the intensity of the fluorescence background component of the fluorescence plus Raman spectrum obtained with the first laser beam of the first wavelength.

**Revendications**

1. Système de spectrophotométrie Raman à laser comprenant:

— des moyens formant source laser (1, 2) agencés de manière à fournir un premier faisceau laser (4) possédant une première longueur d'onde et un second faisceau laser (5) possédant une seconde longueur d'onde différente de ladite première longueur d'onde,

— des moyens optiques (3, 8, 9) servant à diriger, de façon alternée et périodique, à une fréquence prédéterminée, le premier et le second faisceaux laser suivant un trajet optique essentiellement identique jusqu'à un échantillon (11) devant être mesuré,

— le premier faisceau laser (4) possédant la première longueur d'onde étant agencé de manière à produire un spectre de fluorescence plus un spectre Raman à partir de l'échantillon et le second faisceau laser (5) possédant la seconde longueur d'one étant agencé de manière à produire uniquement ledit spectre de fluorescence à partir de l'échantillon,

— un spectromètre (13) comportant un détecteur (14) détectant la lumière émise par l'échantillon (11) et la transformant en des premier et second signaux électriques, représentant respectivement le spectre de fluorescence plus le spectre Raman et le seul spectre de fluorescence, et

— des moyens amplificateurs de verrouillage fonctionnant à ladite fréquence prédéterminée et agencés de manière à soustraire respectivement lesdits premier et second signaux en vue de fournir un signal de sortie représentant essentiellement uniquement ledit spectre Raman, caractérisé en ce que

lesdits moyens formant source laser comprennent une première source laser (1) et une seconde source laser (2), délivrant respectivement lesdits premier et second faisceaux laser, et des moyens de commande (22) commandant la seconde source laser (2) de manière à régler l'intensité du faisceau émis par cette source de telle sorte que l'intensité résultante du spectre de fluorescence seul obtenu avec le second faisceau laser (5) possédant la seconde longueur d'onde est égale à l'intensité de la composante de fond de fluorescence du spectre de fluorescence plus le spectre Raman, obtenus avec le premier faisceau laser (4) possédant la première longueur d'onde.

2. Systéme de photométrie laser selon la revendication 1, caractérisé en ce que les moyens optiques (3, 9) comprennent des moyens (32, 33) délivrant un signal de référence, qui produisent un signal de référence électrique possédant ladite première fréquence prédéterminée et une relation de phase constante avec les premier et second faisceaux laser transmis en alternance, le signal de référence étant envoyé à l'amplificateur de verrouillage (18).

3. Système de spectrophotométrie laser selon la revendication 1 ou 2, caractérisé en ce que les moyens optiques (3, 9) comprennent un obturateur à secteurs à lames (31) comportant des secteurs de transmission et des secteurs d'obturation, qui possèdent des largeurs identiques.

4. Système de spectrophotométrie laser selon l'une des revendications 1 à 3, caractérisé en ce que lesdits moyens (32, 33) délivrant un signal de référence comprennent un diviseur de faisceau (32) divisant le premier faisceau laser (4) et un détecteur opto-électrique (33) recevant la partie dudit premier faisceau laser et la transformant en le signal de référence électrique.

5. Procédé pour mesurer des spectres Raman consistant à:

— irradier un échantillon d'une manière alternée et périodique avec deux faisceaux laser possédant des longueurs d'onde différentes, à une fréquence prédéterminée, le faisceau laser possédant la première longueur d'onde produisant à partir de l'échantillon un spectre de fluorescence plus un spectre Raman et le faisceau laser possédant la seconde longueur d'onde produisant à partir de l'échantillon uniquement un spectre de fluorescence,

— détecter lesdits spectres respectifs au moyen d'un spectromètre utilisant un détecteur pour produire de premier et second signaux représentatifs de ce spectre, et

— utiliser des moyens amplificateurs de verrouillage fonctionnant à ladite fréquence prédéterminée de manière à soustraire effectivement lesdits premier et second signaux l'un de l'autre de manière à former un signal de sortie représentant essentiellement uniquement ledit spectre Raman, caractérisé en ce que:

— les faisceaux laser possédant lesdites première et seconde longueurs d'onde sont fournis par des première et seconde sources laser (1, 2) et la seconde source laser (2) est commandée de manière à régler l'intensité du faisceau, qu'elle émet, de manière que l'intensité résultante du spectre de fluorescence, obtenu avec le second faisceau laser possédant la seconde longueur d'onde, est égale à l'intensité de la composante de fond de fluorescence de l'ensemble formé du spectre de fluorescence plus le spectre Raman obtenu avec ledit premier faisceau laser possédant la première longueur d'onde.

## Patentansprüche

1. Laser-Raman-Spektrofotometersystem mit einer Laserversorgung (1, 2), die so angeordnet ist, daß sie einen ersten Laserstrahl (4) einer ersten Wellenlänge und einen zweiten Laserstrahl (5) einer zweiten, von der ersten verschiedenen Wellenlänge liefert,

einer Optik (3, 8, 9), die abwechselnd und periodisch mit vorbestimmter Frequenz den ersten und den zweiten Laserstrahl entlang einem im wesentlichen identischen Strahlengang auf eine zu messende Probe (11) richtet,

wobei der erste Laserstrahl (4) der ersten Wellenlänge so angeordnet ist, daß er ein Fluoreszenz-plus-Ramanspektrum der Probe erzeugt, und der zweite Laserstrahl (5) der zweiten Wellenlänge so angeordnet ist, daß er nur das Fluoreszenzspektrum der Probe erzeugt,

einem Spektrometer (13) mit einem Detektor (14), der von der Probe (11) ausgesandtes Licht erfaßt und es in ein erstes und ein zweites elektrisches Signal umsetzt, die jeweils das Fluoreszenz-plus-Ramanspektrum bzw. das Nur-Fluoreszenzspektrum bezeichnen, und

einem mit der vorbestimmten Frequenz arbeitenden Phaseneinrastverstärker, der so angeordnet ist, daß er das erste und das zweite Signal effektiv subtrahiert unter Bildung eines Ausgangssignals, das im wesentlichen nur das Ramanspektrum bezeichnet, dadurch gekennzeichnet,

daß die Laserversorgung eine erste (1) und eine zweite (2) Laserlichtquelle, die jeweils den ersten und den zweiten Laserstrahl erzeugen, sowie eine Steuereinheit (22) umfaßt, die die zweite Laserquelle (2) so steuert, daß die Intensität des davon ausgehenden Strahls derart einstellbar ist, daß die resultierende Intensität des mit dem zweiten Laserstrahl (5) der zweiten Wellenlänge erhaltenen Nur-Fluoreszenzspektrums gleich der Intensität der Fluoreszenz-Hintergrundkomponente des mit dem ersten Laserstrahl (4) der ersten Wellenlänge erhaltenen Fluoreszenz-plus-Ramanspektrums ist.

2. Laser-Fotometersystem nach Anspruch 1, dadurch gekennzeichnet, daß die Optik (3, 9) einen Standardsignalgeber (32, 33) aufweist, der ein elektrisches Standardsignal erzeugt, das die vorbestimmte Frequenz sowie eine konstante Phasenlage in bezug auf die abwechselnd gerichteten ersten und zweiten Laserstrahlen hat und das dem Phaseneinrastverstärker (18) zugeführt wird.

3. Laser-Spektrofotometersystem nach Anspruch 1 oder 2, dadurch gekennzeichnet, daß die Optik (3, 9) eine Lamellen-Sektorenblende (31) mit Durchtritts- und Verschlußsektoren gleicher Breite aufweist.

4. Laser-Spektrofotometersystem nach einem der Ansprüche 1—3, dadurch gekennzeichnet, daß der Standardsignalgeber (32, 33) einen Strahlenteiler (32), der den ersten Laserstrahl (4) teilt, und einen optoelektrischen Detektor (33) aufweist, der den Teil des ersten Laserstrahls empfängt und in das elektrische Standardsignal umsetzt.

5. Verfahren zur Messung von Ramanspektren, umfassend:

abwechselndes und periodisches Bestrahlen einer Probe mit zwei Laserstrahlen unterschiedlicher Wellenlänge bei einer vorgegebenen Frequenz, wobei der Laserstrahl der ersten Wellenlänge ein Fluoreszenz-plus-Ramanspektrum der Probe und der Laserstrahl der zweiten Wellenlänge nur ein Fluoreszenzspektrum der Probe erzeugt,

Erfassen der jeweiligen Spektren mittels eines Spektrometers, das einen Detektor aufweist zur Erzeugung eines ersten und eines zweiten, für die jeweiligen Spektren repräsentativen Signals, und

Verwenden eines Phaseneinrastverstärkers, der mit der vorgegebenen Frequenz arbeitet und effektiv das erste und das zweite Signal subtrahiert unter Bildung eines Ausgangssignals, das im wesentlichen nur das Ramanspektrum repräsentiert, dadurch gekennzeichnet, daß

die Laserstrahlen der ersten und der zweiten Wellenlänge von einer ersten und einer zweiten Laserquelle (1, 2) erzeugt werden und die zweite Laserquelle (2) so gesteuert wird, daß die Intensität des davon ausgehenden Strahls so einstellbar ist, daß die resultierende Intensität des mit dem zweiten Laserstrahl der zweiten Wellenlänge erhaltenen Fluoreszenzspektrums gleich der Intensität der Fluoreszenz-Hintergrundkomponente des mit dem ersten Laserstrahl der ersten Wellenlänge erhaltenen Fluoreszenz-plus-Ramanspektrums ist.

8

FIG. 1 PRIOR ART

1

FIG. 2

SCATTERING INTENSITY

A (Kr⁺)

B(Ar⁺)

⎯ RAMAN SCATTERING

ONE PERIOD

⎯ FLUORESCENCE

TIME

FIG. 4

SAMPLE;
CARNAUBA WAX

A (Kr⁺ LASER ONLY)

RAMAN INTENSITY (ARBITRARY UNIT)

A-B (Kr⁺ LASER +Ar⁺ LASER;
PHASE-LOCKED)

Kr⁺ LASER;
568.2nm, 100mW
Ar⁺ LASER;
488.0nm, 140mW

3000    2000    1500    1000    500

RAMAN SHIFT (cm⁻¹)